# EUROPÄISCHE PATENTSCHRIFT

(11) **EP 1 031 140 B1**
(45) Veröffentlichungstag und Bekanntmachung des Hinweises auf die Patenterteilung: **10.10.2001**
(21) Anmeldenummer: 98962273.3
(22) Anmeldetag: 16.11.1998
(51) Int. Cl.: G10L 15/26, G10L 15/28

(54) **VERFAHREN UND VORRICHTUNG ZUR SPRACHERKENNUNG**
METHOD AND DEVICE FOR VOICE RECOGNITION
PROCEDE ET DISPOSITIF DE RECONNAISSANCE DE LA PAROLE

(30) Priorität: 21.11.1997 DE 19751739
(43) Veröffentlichungstag der Anmeldung: 30.08.2000
(73) Patentinhaber: SIEMENS AKTIENGESELLSCHAFT, 80333 München (DE)
(72) Erfinder: HAUENSTEIN, Alfred, D-80939 München (DE)
(86) Internationale Anmeldenummer: DE9803366
(87) Internationale Veröffentlichungsnummer: WO9927524

(56) Entgegenhaltungen:
- WO-A-98/22936
- US-A- 5 682 464
- BOCCHIERI E: "VECTOR QUANTIZATION FOR THE EFFICIENT COMPUTATION OF CONTINUOUS DENSITY LIKELIHOODS" SPEECH PROCESSING, MINNEAPOLIS, APR. 27 - 30, 1993, Bd. 2, 27. April 1993, Seiten II-692-695, XP000427884 INSTITUTE OF ELECTRICAL AND ELECTRONICS ENGINEERS
- ORTMANNS S ET AL: "LOOK-AHEAD TECHNIQUES FOR FAST BEAM SEARCH" 1997 IEEE INTERNATIONAL CONFERENCE ON ACOUSTICS, SPEECH, AND SIGNAL PROCESSING, SPEECH PROCESSING, DIGITAL SIGNAL PROCESSING MUNICH, APR. 21 - 24, 1997, Bd. 3, 21. April 1997, Seiten 1783-1786, XP000735006 INSTITUTE OF ELECTRICAL AND ELECTRONICS ENGINEERS

## Beschreibung

Die Erfindung betrifft ein Verfahren und eine Vorrichtung zur Spracherkennung.

Ein Spracherkennungssystem ist aus [1] bekannt. Dort finden sich auch eine grundlegende Einführung der an dem Spracherkennungssystem beteiligten Komponenten sowie wichtiger, bei der Spracherkennung üblicher Techniken.

Bei einem bekannten Spracherkennungssystem ist eine Genauigkeit, also ein Maß für eine Qualität der Erkennung, vorgegeben. Der Benutzer muß nun mit diesem System auskommen, auch wenn für seine Anwendung eine verminderte Genauigkeit ausreichen, dafür er aber eine höhere Bearbeitungsgeschwindigkeit erzielen würde.

Das Prinzip des Pruning eines Suchraums ist aus [2] (siehe Kapitel 3.3.3, Seite 40) bekannt. Dabei handelt es sich um ein "Beschneiden" des Suchraums, also eine Methode zur Reduzierung einer Anzahl von Suchpfaden des Suchraums, wobei diejenigen Suchpfade abgeschnitten werden, die wenig aussichtsreich sind. Zuerst wird dazu ein Suchpfad mit minimalen Kosten (optimaler Suchpfad) ermittelt. Daraufhin werden alle Suchpfade (Äste des Suchbaums) weggeschnitten, deren Kosten oberhalb des Minimums zuzüglich einer addierten vorgegebenen Bewertungsgröße, die als Pruning-Schwelle bezeichnet wird, liegen. Für eine detaillierte Erklärung des Prunings: [2], Seite 40ff., insbesondere Bild 16 auf Seite 41.
Bei Verwendung der Pruning-Schwelle ist nicht bekannt, wieviel Suchpfade in dem Suchbaum übrig bleiben. Will man die Anzahl dieser übrigbleibenden Suchpfade auf einem vorgegebenen Niveau halten, wird die Pruning-Schwelle dynamisch angepaßt.

Ein Histogramm-Pruning ist aus [3] oder [4] bekannt. Hier werden eine vorgegebene Anzahl "bester" Suchpfade, also Suchpfade mit einer hohen Auftrittswahrscheinlichkeit, verwendet, indem Häufigkeiten der Suchpfade in Form eines Histogramms bewertet werden. Die Pruning-Schwelle wird dynamisch verändert.

Eine akustische Vorausschau im Suchbaum (Fachtwort: Fast-Look-) Ahead) ist aus [5] oder [6] bekannt.

Die bei der akustischen Vorausschau (auch schnelle Vorauswahl) verfolgte Idee beruht auf der Eigenschaft einer Sprache, daß sich alle Wörter aus einem beschränkten Inventar von Unterworteinheiten (z.B. Phonemen, Halbsilben) zusammensetzen. Für diese Unterworteinheiten wird nun "im Voraus" eine akustische Bewertung durchgeführt. Es werden nur diejenigen Kombinationen von Unterworteinheiten weiterverfolgt, deren akustische Bewertungen jeweils unterhalb einer vorgegebenen Schwelle liegen. Ein Gewinn im Bewertungsaufwand besteht darin, daß für eine geringe Anzahl von Unterworteinheiten ein Maß für die Übereinstimmung eines zu erkennenden Sprachsignals mit einer Zielgröße im voraus berechnet und als Grundlage für eine Entscheidung herangezogen wird, ob ein Großteil des Suchbaums nicht weiter berücksichtigt werden soll. Anschaulich gesprochen bedeutet dies, daß mehr Suchpfade im Suchbaum eingespart werden, als durch die Vorausberechnung hinzukommen. Ein derartiger Gewinn wird umso größer, je höher das Verhältnis von neuen Wortanfängen zu einer Anzahl von Unterworteinheiten wird. Dieses Verhältnis steigt mit der Anzahl der zu erkennenden Unterworteinheiten bzw. Wörter (Lexikongröße).

Ein Vorteil des Verfahrens der akustischen Vorausschau besteht in der Regularität der Algorithmen zur Berechnung der entsprechenden Maße. Da keine Verzweigungen durch Wortenden, Syntaxknoten, etc. im Suchraum auftreten, ist das Schema der Berechnung der Maße regulär. Gerade deshalb bietet sich ein solches Verfahren auch für eine Implementierung in Hardware an.

Die Vorausberechnung der Maße (Fachwort: Fast-Match-Scores) wird dadurch möglich, daß die eigentliche Suche um eine feste Anzahl von Zeitfenstern hinter den aktuellen extrahierten Maßen des Sprachsignals hinterhereilt. Mit den aktuellen Maßen wird die Vorausberechnung der Maße weiterer Unterworteinheiten durchgeführt (siehe [3], Seite 63, Bild 33).

Auch in Sprachmodellen ist die Durchführung einer derartigen Vorausschau bekannt (siehe [6]).

Das Prinzip der Vorausschau im Sprachmodell (Fachwort: Language-Model-Look-Ahead) ist die Berücksichtigung der im Sprachmodell vorhandenen Wahrscheinlichkeiten in dem Suchprozeß so früh wie möglich, auch in dem assoziierten Pruning. Dies wird erreicht durch eine Faktorisierung der Wahrscheinlichkeiten im Sprachmodell. Eine detaillierte Beschreibung mit einer formalen Notation ist in [6] enthalten.

Schließlich ist z.B. aus [7] eine Schwelle zur Auswahl zu berechnender Distanzparameter bekannt. Derartige Auswahlverfahren sind generell mehrstufig angelegt. Zuerst wird eine grobe Berechnung mit einem Teil der Distanzen durchgeführt. Im nächsten Schritt werden dann diejenigen Distanzen bestimmt, die bezüglich eines Abstandsmaßes nahe an der besten Distanz des ersten Berechnungsschrittes liegen. Dieses Abstandsmaß kann über eine Schwelle variiert werden, wodurch der Berechnungsaufwand für die Bestimmung der Distanzparameter variiert wird.

Die Aufgabe der Erfindung besteht darin, ein Verfahren und eine Vorrichtung zur Einstellung der Genauigkeit des Spracherkennungssystems zu schaffen.

Dieses Aufgabe wird gemäß den Merkmalen der unabhängigen Patentansprüche gelöst.

Es wird ein Verfahren zur Einstellung einer Genauigkeit eines Spracherkennungssystems angegeben, bei dem durch eine vorgebbare Eingangsgröße die Genauigkeit bestimmt wird. Anhand dieser Eingangsgröße werden Werte für Systemparameter des Spracherkennungssystems, vorzugsweise mittels eines Rechners, ermittelt. Anhand dieser Werte wird das Spracherkennungssystem eingestellt. Dies geschieht vorzugsweise automatisch durch den Rechner.

Somit ist es ein Vorteil der Erfindung, die Genauigkeit des Spracherkennungssystems adaptierbar und zugleich für den Laien einstellbar zu machen. Je nach Anwendung bzw. je nach Rechenleistung, die für das Spracherkennungssystem auf dem Rechner bereitsteht, können unterschiedliche Anforderungen an die Qualität des Spracherkennungssystems einfach durch Adaption der Eingangsgröße vorgenommen werden.

Eine Weiterbildung besteht darin, daß gemäß einer Abbildungsvorschrift aus der Eingangsgröße die Werte für die Systemparameter des Spracherkennungssystems ermittelt werden. Dabei kann diese Abbildungsvorschrift anhand einer Tabelle umgesetzt sein.

Es ist also möglich, durch Einstellung der Eingangsgröße automatisch die damit verknüpften Werte der Systemparameter des Spracherkennungssystems zu ermitteln und automatisch dem Spracherkennungssystem zugänglich zu machen. Das Ablegen der Werte in einer Tabelle hat den Vorteil, daß eine individuelle Anpassung verschiedener Werte der Eingangsgröße zu jeweils verschiedenen Werten der Systemparameter durchgeführt werden kann.

Eine andere Weiterbildung besteht darin, die Einstellung während des Betriebs des Spracherkennungssystems durchzuführen. Dabei ergibt sich vorteilhaft, daß die Anpassung des Spracherkennungssystems individuell nach den jeweiligen Anforderungen während des Betriebs des Spracherkennungssystems angepaßt werden kann.

Eine zusätzliche Weiterbildung der Erfindung besteht darin, daß mindestens einer der folgenden Systemparameter anhand der Eingangsgröße bestimmt wird:
a) Pruning-Schwelle;
b) Histogramm-Pruning;
c) akustische Vorausschau;
d) Vorausschau im Sprachmodell;
e) Schwelle zur Auswahl zu berechnender Distanzparameter.

Zur Bedeutung und Funktion dieser Systemparameter wird auf die Einleitung verwiesen.

Die angeführten Systemparameter stellen eine Auswahl von Möglichkeiten dar. Es sind andere Systemparameter vorstellbar, die, abhängig von dem jeweiligen Spracherkennungssystem, von den oben genannten verschieden sein können.

Auch ist es eine Weiterbildung der Erfindung, daß die Systemparameter hinsichtlich ihres Einflusses auf eine Zielgröße hin gewichtet werden. Dabei kann die Zielgröße beispielsweise eine Genauigkeit des Spracherkennungssystems oder eine Geschwindigkeit des Spracherkennungssystems (also die Geschwindigkeit zur Durchführung des Spracherkennungsprozesses) sein. Im Hinblick auf die jeweilige Zielgröße können die Systemparameter anteilig gleich oder entsprechend einer vorgegebenen Gewichtungstabelle unterschiedlich gewichtet werden.

Im Rahmen einer anderen Weiterbildung wird die Eingangsgröße anhand eines Einstellelements bestimmt.

Vorzugsweise weist das Einstellelement einen eindimensionalen Freiheitsgrad mit zwei Begrenzungen auf, wobei die erste Begrenzung als maximale Genauigkeit des Spracherkennungssystems und die zweite Begrenzung als maximale Geschwindigkeit des Spracherkennungssystems umgesetzt werden.

Auch ist es eine Weiterbildung des Verfahrens, daß das Einstellelement auf einem Rechner als ein Schieberegler dargestellt wird und anhand einer Tastatur, eines Touch-Pads oder einer Maus bedient wird.

Auch kann das Einstellelement ein Drehregler, ein Schieberegler oder Potentiometer sein.

In einer zusätzlichen Weiterbildung wird das Einstellelement über Sprache angesteuert, die von einem Spracherkenner, insbesondere dem Spracherkennungssystem, ausgewertet wird. Die Eingangsgröße kann mittels Spracheingabe bestimmt werden.

Das Verfahren wird auch weitergebildet, indem eine vollständig automatisierte Bestimmung der Eingangsgröße in den folgenden Schritten durchgeführt wird:
Eine Leistungsfähigkeit des Rechners, auf dem das Spracherkennungssystem ablaufen soll, wird anhand eines Programms zur Leistungsermittlung bestimmt und als ein Leistungsindex abgespeichert. Unter Berücksichtigung des Leistungsindex werden die Systemparameter des Spracherkennungssystems automatisch eingestellt und dadurch wird eine leistungsfähige Spracherkennung unter z.B. Echtzeitbedingung gewährleistet.
Ein Programm zur Bestimmung der Leistungsfähigkeit des Rechners kann eine vorgegebene Schleife sein, die eine bestimmte Anzahl Iterationen durchläuft, wobei die Zeit für die Iterationen gemessen wird. Anhand einer Tabelle kann abhängig von der gemessenen Zeit der Leistungsindex bestimmt werden. Auch gibt es kommerziell oder als Freeware verfügbare Programme, die die Leistungsfähigkeit des Rechners ermitteln und als eine Bewertungsgröße der Leistungsfähigkeit einen Leistungsindex ausgeben.

Auch wird eine Vorrichtung zur Spracherkennung angegeben, die ein Spracherkennungssystem aufweist und mit einem Mittel zur Einstellung einer Genauigkeit des Spracherkennungssystems ausgeführt ist, welches Mittel Systemparameter des Spracherkennungssystem aus einer Eingangsgröße umsetzt, also die Einstellung des Spracherkennungssystems und seiner zahlreichen Systemparameter anhand der Eingangsgröße vornimmt.

Dabei ist es vorteilhaft, daß eine solche Einstellung der Systemparameter anhand der Eingangsgröße während des Betriebs des Spracherkennungssystems erfolgen kann. So wird für den Benutzer eine einfache Anpassung der Vielzahl von Systemparametern möglich.

Die Eingangsgröße ist in einer Weiterbildung automatisch bestimmbar. Dazu wird anhand einer Einrichtung zur Leistungsmessung des Rechners, auf dem das Spracherkennungssystem abläuft, ein sog. Leistungsindex ermittelt und zur Einstellung der Genauigkeit des Spracherkennungssystems benutzt.

Eine andere Weiterbildung sieht vor, daß die Eingangsgröße durch ein Einstellelement vorgebbar ist. Dazu sind eine Vielzahl möglicher Einstellemente (Potentiometer, virtuelle Steuereinheiten auf dem Rechner, etc.) denkbar, deren Einstellung direkt die Genauigkeit des Spracherkennungssystems bestimmt.

Vorteilhaft können Schritte des erfindungsgemäßen Verfahrens auf der angegebenen Vorrichtung durchgeführt werden.

Weiterbildungen der Erfindung ergeben sich auch aus den abhängigen Ansprüchen.

Anhand der folgenden Figuren werden Ausführungsbeispiele der Erfindung näher dargestellt.

Es zeigen
- Fig.1: eine Systemarchitektur für ein Spracherkennungssystem;
- Fig.2: ein Blockdiagramm mit Schritten eines Verfahrens zur Einstellung der Genauigkeit eines Spracherkennungssystems;
- Fig.3: ein Blockdiagramm, das eine Verknüpfung einer Eingangsgröße mit mindestens einem Systemparameter über eine Abbildungsvorschrift darstellt;
- Fig.4: ein Diagramm, das verschiedene mögliche Systemparameter des Spracherkennungssystems darstellt;
- Fig.5: eine Skizze, die den Einfluß der Systemparameter auf eine Zielgröße darstellt;
- Fig.6: ein Diagramm, das verschiedene Möglichkeiten zur Einstellung der Eingangsgröße darstellt;
- Fig. 7: ein Spracherkennungssystem mit einem Mittel zur Einstellung der Genauigkeit.

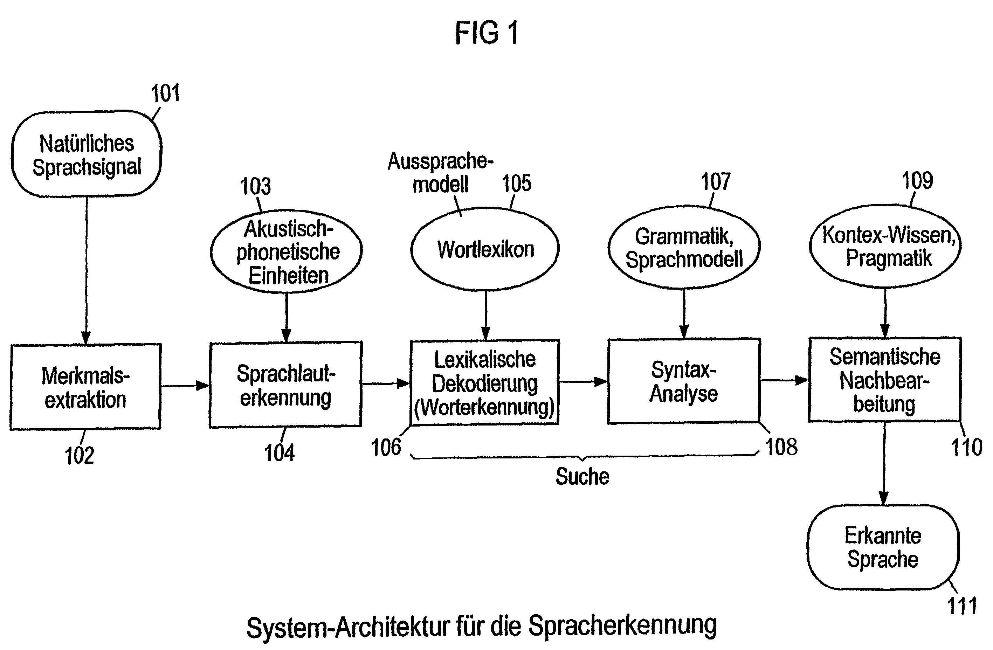

In **Fig.1** ist allgemein eine Systemarchitektur für eine Spracherkennung (Spracherkennungssystem) dargestellt.

Voraussetzung für die Erkennung natürlich gesprochener Sprache ist ein geeigneter Formalismus zur

Wissensrepräsentation. Ein vollständiges Spracherkennungssystem umfaßt mehrere Verarbeitungsebenen. Dies sind insbesondere Akustik-Phonetik, Intonation, Syntax, Semantik und Pragmatik. In Fig.1 werden die Verarbeitungsebenen bei der Erkennung aufgezeigt.

Das natürliche Sprachsignal 101 gelangt in das Spracherkennungssystem. Dort wird in einer Komponente 102 eine Merkmalsextraktion durchgeführt. Nach der Merkmalsextraktion werden anhand bekannter akustischphonetischer Einheiten 103 Sprachlaute erkannt (siehe Block 104). Dabei handelt es sich um die Berechnung akustischer Distanzparameter. Nach der Sprachlauterkennung 104 erfolgt die lexikalische Decodierung (Worterkennung) in einem Block 106 mit Hilfe des Aussprachemodells bzw. Wortlexikons 105 und daran anschließend eine Syntaxanalyse 108 mit Hilfe des Sprachmodells, das die Grammatik umfaßt, 107. Die Worterkennung 106 und die Syntaxanalyse 108 stellen die Suche nach einer Entsprechung für das Sprachsignal dar. Schließlich wird in einem Block 110 eine semantische Nachbearbeitung durchgeführt, wobei Kontextwissen und Pragmatik 109 berücksichtigt werden und schließlich die vom Spracherkennungssystem erkannte Sprache 111 folgt.

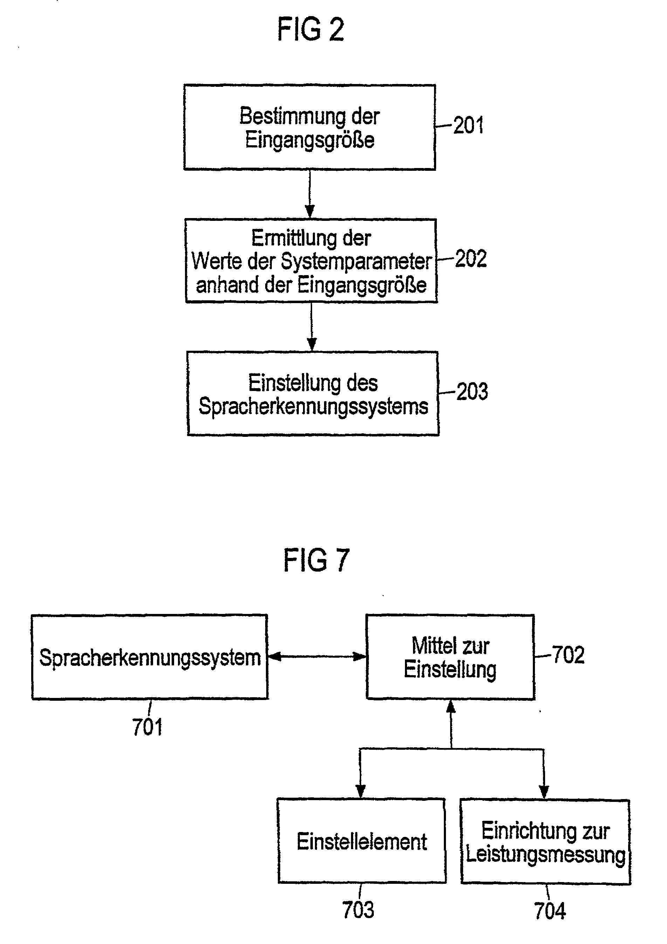

In **Fig.2** ist ein Blockdiagramm dargestellt, das Schritte eines Verfahrens zur Einstellung der Genauigkeit eines Spracherkennungssystems zeigt.

In einem Schritt 201 wird eine Eingangsgröße bestimmt. Daraufhin wird in einem Schritt 202 anhand dieser Eingangsgröße für Systemparameter des Spracherkennungssystems Werte ermittelt. Schließlich wird in einem Schritt 203 das Spracherkennungssystem anhand der ermittelten Werte eingestellt.

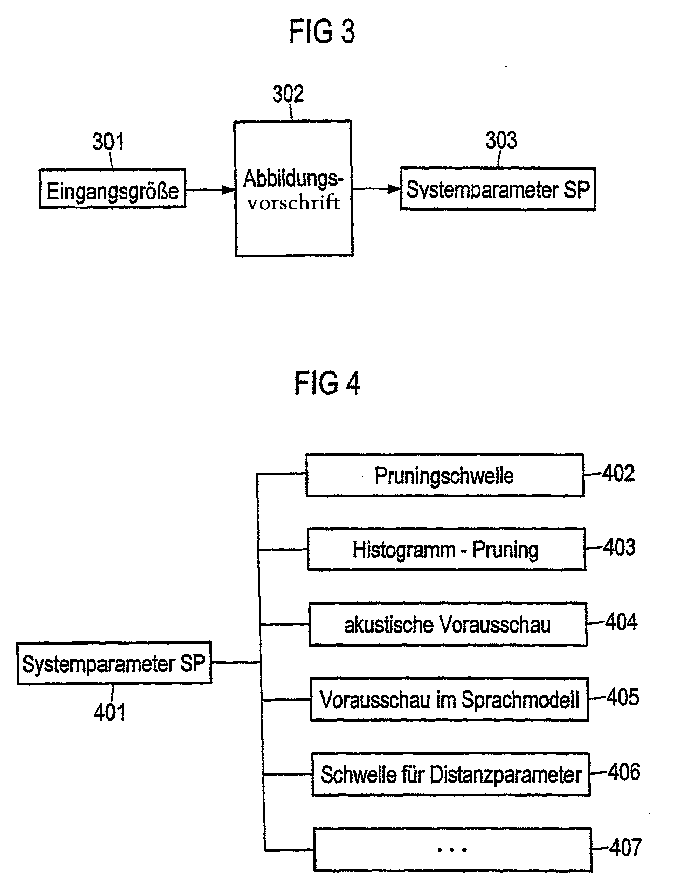

**Fig.3** zeigt ein Blockdiagramm, das eine Verknüpfung einer Eingangsgröße über eine Abbildungsvorschrift mit mindestens einem Systemparameter darstellt.

Die erwähnte Eingangsgröße 301 wird anhand einer Abbildungsvorschrift 302 auf die Systemparameter SP 303 des Spracherkennungssystems abgebildet. Dabei wird vorzugsweise eine Eingangsgröße 301 mehreren Systemparametern über die Abbildungsvorschrift zugeordnet. Durch diese Abbildungsvorschrift 302 wird durch Vorgabe einer Eingangsgröße das Spracherkennungssystem angepaßt, also werden mehrere Systemparameter SP durch Veränderung einer Eingangsgröße 301 beeinflußt. Die Abbildungsvorschrift 302 hat vorzugsweise die Form einer Tabelle, in der eine Spalte mögliche Eingangsgrößen 301 enthält, und in einer Zeile dieser Spalte der jeweiligen Eingangsgröße mehrere Werte für Systemparameter SP 303 zugeordnet werden. Die Abbildungsvorschrift 302 besteht im Suchen nach dem der Eingangsgröße 301 zugeordneten Eintrag (Zeile) in der Tabelle und in der Übergabe der gefundenen Werte für Systemparameter SP 303 an das Spracherkennungssystem.

**Fig.4** zeigt ein Diagramm, das verschiedene mögliche Systemparameter des Spracherkennungssystems darstellt. Die Systemparameter SP des Spracherkennungssystems, dargestellt in einem Block 401, umfassen mindestens einen der folgenden Parameter:
a) Pruning-Schwelle 402;
b) Histogramm-Pruning 403;
c) akustische Vorausschau 404;
d) Vorausschaum im Sprachmodell 405;
e) Schwelle für Distanzparameter 406.

Insgesamt sind weitere Systemparameter des Spracherkennungssystems zur Einstellung über die Eingangsgröße 301 denkbar, angedeutet durch den Block 407.

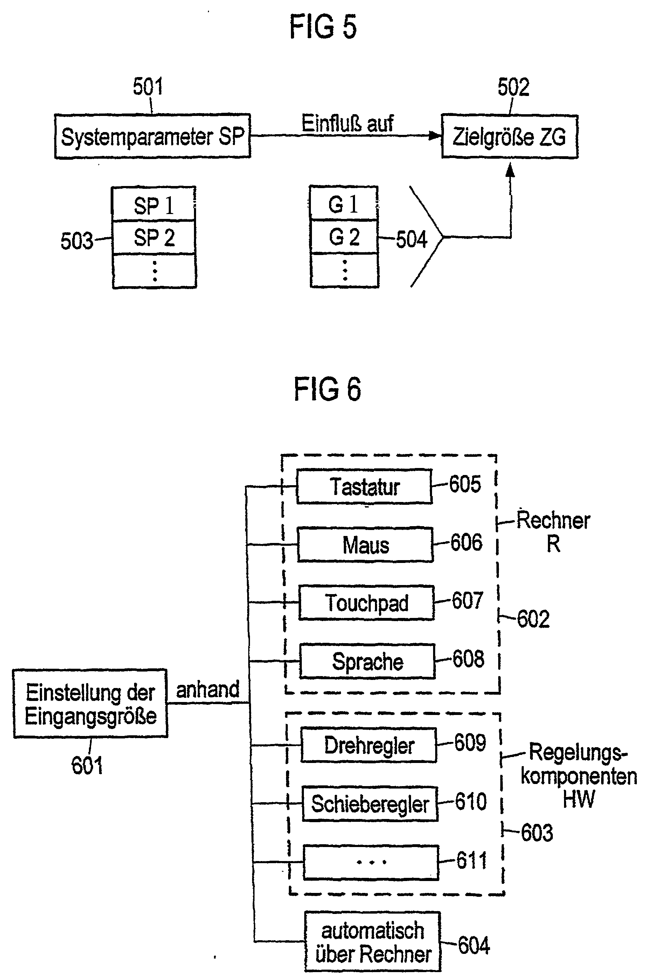

**Fig.5** zeigt eine Skizze, die den Einfluß der Systemparameter auf eine Zielgröße darstellt.

Die Systemparameter SP (siehe Block 501) nehmen Einfluß auf eine Zielgröße ZG (siehe Block 502). Wie oben beschrieben, gibt es mehrere Systemparameter SP1, SP2, usw., dargestellt in einem Block 503. Dabei nimmt jeder einzelne Systemparameter SPi (i=1,2,...) mittels eines für den jeweiligen Systemparameter SPi vorgesehenen Gewichts Ci. (dargestellt in einem Block 504) Einfluß auf die Zielgröße ZG. Durch die Gewichtung der Systemparameter SP ist es möglich, je nach Systemparameter SP einen unterschiedlichen Einfluß auf die Zielgröße ZG zu nehmen.

In **Fig.6** ist ein Diagramm dargestellt, das verschiedene Möglichkeiten zur Einstellung der Eingangsgröße zeigt. Die Einstellung der Eingangsgröße, dargestellt in dem Block 601, erfolgt anhand von Bedienkomponenten des Rechners R (siehe Block 602), anhand von Regelungskomponenten 603 oder anhand des Rechners selbst (siehe Block 604). Der Rechner R umfaßt dazu mindestens ein Mittel zur Einstellung der Eingangsgröße, wie eine Tastatur 605, eine Maus 606, ein Touch-Pad 607 oder Spracheingabe 608 über das Spracherkennungssystem. Mögliche Komponenten zur Regelung, dargestellt in dem Block 603 sind ein Drehregler 609, ein Schieberegler 610 oder ein sonstiger Regler 611, vorzugsweise ein Potentiometer. Zusätzlich wird automatisch anhand eines Programms, das auf dem Rechner läuft, die Rechenleistung des Rechners ermittelt und die Eingangsgröße zur Einstellung des Spracherkennungssystems entsprechend bestimmt. Dadurch wird gewährleistet, daß ein automatisch eingestellter Rechner eine seiner Rechenleistung entsprechende Qualität bei der Spracherkennung gewährleistet. Automatisch wird ein Kompromiß gefunden zwischen hoher Qualität bei der Spracherkennung, unter Einbuße von Rechenleistung bzw. Echtzeiterkennung der Sprache, und schneller Spracherkennung mit entsprechend wenig Bedarf an Rechenleistung,, allerdings deutlicher Qualitätseinbuße bei der Spracherkennung.

**Fig.7** zeigt eine Vorrichtung aus einem Spracherkennungssystem 701 und einem Mittel zur Einstellung der Genauigkeit des Spracherkennungssystems 702.

Anhand des Mittels zur Einstellung der Genauigkeit 702 sind durch eine Eingangsgröße Systemparameter des Spracherkennungssystems bestimmt. Dazu wird die Eingangsgröße, vorzugsweise anhand einer vorgegebenen Tabelle, einer Vielzahl von Systemparametern (Pruning-Schwelle, Histogramm-Pruning, akustische Vorausschau, Vorausschau im Sprachmodell, Schwelle zur Auswahl zu berechnender Distanzparameter, etc.) zugeordnet.

Die Eingangsgröße ist wahlweise anhand eines Einstellelements 703 oder einer Einrichtung zur Leistungsbestimmung des Rechners 704 bestimmbar. Hierbei sei auch auf Fig.6 und die dort angegebenen Möglichkeiten zur Einstellung der Eingangsgröße verwiesen.

Im Rahmen dieses Dokuments wurden folgende Veröffentlichungen zitiert:
[1] A. Hauenstein: "Optimierung von Algorithmen und Entwurf eines Prozessors für die automatische Spracherkennung", Lehrstuhl für Integrierte Schaltungen, Technische Universität München, Dissertation, 19.07.1993, Kapitel 2, Seiten 13 bis 26.
[2] A. Hauenstein: "Optimierung von Algorithmen und Entwurf eines Prozessors für die automatische Spracherkennung", Lehrstuhl für Integrierte Schaltungen, Technische Universität München, Dissertation, 19.07.1993, Kapitel 3.3.3, Seiten 40 bis 43.
[3] Volker Steinbiss, Bach-Hiep Tran, Hermann Ney: "Improvements in Beam Search. Proc. Intl. Conf. Speech and Language Processing, Yokohama 1994, Seiten 2143 bis 2146.
[4] M. Niemöller, A. Hauenstein, E. Marschall, P. Witschel, U. Harke: "A PC-based Real-Time Large Vocabulary Continuous Speech Recognizer for German", Proc. IEEE Intl. Conf. on Acoustics, Speech and Signal Processing; München 1997.
[5] A. Hauenstein: "Optimierung von Algorithmen und Entwurf eines Prozessors für die automatische Spracherkennung", Lehrstuhl für Integrierte Schaltungen, Technische Universität München, Dissertation, 19.07.1993, Kapitel 3.5.1, Seiten 65 bis 69.
[6] S. Ortmanns, A. Eiden, H. Ney, N. Coenen: "Look-Ahead Techniques for Fast Beam Search", Proc. IEEE Intl. Conf. on Acoustics, Speech and Signal Processing; München 1997, Seiten 1783 bis 1786.
[7] E. Bocchieri: "Vector Quantization for the Efficient Computation of Continuous Density Likelihoods", Proc. IEEE Intl. Conf. on Acoustics, Speech and Signal Processing; 1993, Seiten II-692 bis II-695.

## Patentansprüche

1. Verfahren zur Spracherkennung, bei dem gesprochene Sprache anhand eines Spracherkennungssystems erkannt wird, wobei
a) das Spracherkennungssystem auf einem Rechner abläuft;
b) durch ein Programm zu einer Leistungsermittlung ein Leistungsindex des Rechners bestimmt wird;
c) anhand des Leistungsindex eine Eingangsgröße für das Spracherkennungssystem automatisch bestimmt wird;
d) mit Hilfe dieser Eingangsgröße die Genauigkeit des Spracherkennungssystems automatisch auf die ermittelte Leistung des Rechners eingestellt wird.

2. Verfahren nach Anspruch 1,
bei dem die Werte für die Systemparameter des Spracherkennungssystems bestimmt werden, indem gemäß einer Abbildungsvorschrift aus der Eingangsgröße die Werte ermittelt werden.

3. Verfahren nach Anspruch 2,
bei dem die Abbildungsvorschrift anhand einer Tabelle umgesetzt wird.

4. Verfahren nach einem der vorhergehenden Ansprüche,
bei dem die Einstellung während des Betriebs des Spracherkennungssystems durchgeführt wird.

5. Verfahren nach einem der vorhergehenden Ansprüche,
bei dem das Spracherkennungssystem mindestens einen der folgenden Systemparameter umfaßt:
a) Pruning-Schwelle;
b) Histogramm-Pruning;
c) akustische Vorausschau;
d) Vorausschau im Sprachmodell;
e) Schwelle zur Auswahl zu berechnender Distanzparameter.

6. Verfahren nach Anspruch 5,
bei dem mindestens einer der Systemparameter anhand der Eingangsgröße bestimmt wird.

7. Verfahren nach Anspruch 6,
bei dem die Systemparameter gewichtet werden hinsichtlich ihres Einflusses auf jeweils eine Zielgröße.

8. Verfahren nach Anspruch 7,
bei dem eine Zielgröße mindestens eine der folgenden Größen ist:
a) Genauigkeit des Spracherkennungssystems;
b) Geschwindigkeit des Spracherkennungssystems.

9. Verfahren nach Anspruch 7 oder 8,
bei dem die Systemparameter gleich gewichtet werden.

10. Verfahren nach Anspruch 7 oder 8,
bei dem die Systemparameter entsprechend einer vorgegebenen Gewichtungstabelle gewichtet werden.

11. Vorrichtung zur Spracherkennung,
a) bei der ein Spracherkennungssystem (701) vorgesehen ist;
b) bei der ein Mittel zur Einstellung (702) einer Genauigkeit des Spracherkennungssystems vorgesehen ist, das derart eingerichtet ist, daß Systemparameter des Spracherkennungssystems einstellbar (703, 203) sind, wobei die Systemparameter anhand einer Eingangsgröße ermittelbar sind; (201, 202)
c) bei der eine Einrichtung zur Leistungsmessung (704) vorgesehen ist, die derart eingerichtet ist, daß die Eingangsgröße automatisch bestimmbar ist.

## Claims

1. Method for speech recognition, in which the spoken language is recognized with the aid of a speech recognition system, wherein
a) the speech recognition system runs on a computer;
b) a performance index of the computer is determined by a programme for determining performance;
c) an input variable for the speech recognition system is determined automatically with the aid of the performance index; and
d) the accuracy of the speech recognition system is set automatically to the determined performance of the computer with the aid of this input variable.

2. Method according to Claim 1, in which the values for the system parameters of the speech recognition system are determined by using the input variable to determine the values in accordance with a mapping rule.

3. Method according to Claim 2, in which the mapping rule is converted with the aid of a table.

4. Method according to one of the preceding claims, in which the setting is carried out during operation of the speech recognition system.

5. Method according to one of the preceding claims, in which the speech recognition system comprises at least one of the following system parameters:
a) pruning threshold;
b) histogram pruning;
c) acoustic forecast;
d) forecast in the language model; and
e) threshold for selecting distance parameters to be calculated.

6. Method according to Claim 5, in which at least one of the system parameters is determined with the aid of the input variable.

7. Method according to Claim 6, in which the system parameters are weighted with regard to their influence on one target variable in each case.

8. Method according to Claim 7, in which a target variable is at least one of the following variables:
a) accuracy of the speech recognition system; and
b) speed of the speech recognition system.

9. Method according to Claim 7 or 8, in which the system parameters are equally weighted.

10. Method according to Claim 7 or 8, in which the system parameters are weighted in. accordance with a prescribed weighting table.

11. Device for speech recognition,
a) in which a speech recognition system (701) is provided;
b) in which there is provided for the purpose of setting (702) an accuracy of the speech recognition system a means which is set up in such a way that system parameters of the speech recognition system can be set (703, 203), it being possible to determine (201, 202) the system parameters with the aid of an input variable; and
c) in which there is provided for the purpose of measuring performance (704) a device which is set up in such a way that the input variable can be determined automatically.

## Revendications

1. Procédé pour la reconnaissance de la parole,
dans lequel on reconnaît une parole à l'aide d'un système de reconnaissance de la parole,
a) le système de reconnaissance de la parole s'exécutant sur un ordinateur;
b) un indice de puissance de l'ordinateur étant déterminé par un programme destiné à une détermination de puissance ;
c) une grandeur d'entrée pour le système de reconnaissance de la parole étant déterminée automatiquement à l'aide de l'indice de puissance ;
d) la précision du système de reconnaissance de la parole étant réglée automatiquement sur la puissance déterminée de l'ordinateur à l'aide de cette grandeur d'entrée.

2. Procédé selon la revendication 1,
dans lequel on détermine les valeurs pour les paramètres du système de reconnaissance de la parole en déterminant les valeurs à partir de la grandeur d'entrée selon une règle de projection.

3. Procédé selon la revendication 2,
dans lequel on transforme la règle de projection à l'aide d'un tableau.

4. Procédé selon l'une des revendications précédentes,
dans lequel le réglage s'effectue pendant le fonctionnement du système de reconnaissance de la parole.

5. Procédé selon l'une des revendications précédentes,
dans lequel le système de reconnaissance de la parole comprend au moins l'un des paramètres de système suivants :
a) seuil de Pruning ;
b) Pruning en histogramme ;
c) anticipation acoustique ;
d) anticipation dans le modèle de langage ;
e) seuil pour la sélection de paramètres de distance à calculer.

6. Procédé selon la revendication 5,
dans lequel on détermine au moins l'un des paramètres de système à l'aide de la grandeur d'entrée.

7. Procédé selon la revendication 6,
dans lequel on pondère les paramètres de système du point de vue de leur influence sur à chaque fois une grandeur visée.

8. Procédé selon la revendication 7,
dans lequel une grandeur visée est au moins l'une des grandeurs suivantes :
a) précision du système de reconnaissance de la parole ;
b) vitesse du système de reconnaissance de la parole.

9. Procédé selon la revendication 7 ou 8,
dans lequel on pondère les paramètres de système à l'identique.

10. Procédé selon la revendication 7 ou 8,
dans lequel on pondère les paramètres de système en fonction d'un tableau de pondération prédéterminé.

11. Dispositif pour la reconnaissance de la parole,
a) dans lequel il est prévu un système de reconnaissance de la parole (701) ;
b) dans lequel il est prévu un moyen pour le réglage (702) d'une précision du système de reconnaissance de la parole, lequel moyen est conçu de telle sorte que des paramètres du système de reconnaissance de la parole sont réglables (703, 203), les paramètres de système pouvant être déterminés à l'aide d'une grandeur d'entrée (201, 202) ;
c) dans lequel il est prévu un dispositif pour la mesure de puissance (704) qui est conçu de telle sorte que la grandeur d'entrée peut être déterminée automatiquement.
